Europäisches Patentamt

European Patent Office

Office européen des brevets

(19)

(11) Publication number: **0 299 800**
A1

# (12) EUROPEAN PATENT APPLICATION

(21) Application number: 88306532.8

(22) Date of filing: 18.07.88

(51) Int. Cl.⁴: **B 23 C 9/00**
B 23 Q 1/26

(30) Priority: 16.07.87 GB 8716820

(43) Date of publication of application:
18.01.89 Bulletin 89/03

(84) Designated Contracting States:
AT BE CH DE ES FR GR IT LI LU NL SE

(71) Applicant: DRURY MACHINERY COMPANY LIMITED
Manor Vale Works Halifax Road Buttershaw
Bradford BD6 2HN West Yorkshire (GB)

(72) Inventor: Drury, Malcolm
Croft House Wood Hall Croft Wood Hall Lane
Pudsey LS28 7TU West Yorkshire (GB)

(74) Representative: Orr, William McLean et al
URQUHART-DYKES & LORD 5th Floor, Tower House
Merrion Way
Leeds West Yorkshire, LS2 8PA (GB)

(54) An improved machine tool.

(57) A milling machine 10 comprises a machine body 12 having a lower limb 14. The lower limb 14 is provided with four bearing blocks 16 which engage two slide rails 18 fixed vertically to the machine body, and is also provided with a pair of slide rails 20 fixed adjacent the top edge thereof. A cross-slide 22 slides on rails 20 by means of similar bearing blocks, and a work table 24 is located above the cross-slide 22 and is slidable therealong by means of rails 26 fixed to the underneath of the table, which rails 26 are slidable on bearing blocks 28 fixed to the cross-slide.

FIG. 1

EP 0 299 800 A1

**Description**

## AN IMPROVED MACHINE TOOL

This invention relates to a machine tool, and particularly, though not exclusively to a vertical knee-type milling machine.

Milling is a machine operation in which a workpiece is given the desired shape by the action of a rotating cutter while the work piece performs linear movements. In its simplest form the milling cutter is a circular disc whose rim is provided with specially shaped teeth (cutting edges). The work piece is fed against the teeth of the cutter, while the feed motion is longitudinal, transverse or vertical, depending on the type of milling machine and the nature of the work.

Milling machines typically comprise a large C-shaped body with a milling cutter mounted on the upper limb of the body. A work table is situated on the lower limb of the body mounted on a bed. The table moves transversely and longitudinally in order to bring the work piece into contact with the milling cutter by sliding over the bed. This sliding motion between the table and the bed, however, results in a high level of friction between the two surfaces and consequently a powerful motor must be utilised to effect the motion. Due to the high level of friction the interface of the two surfaces requires constant lubrication. Furthermore a relatively soft 'wear' surface must be provided which is invariably the bed, and therefore the bed will frequently need to be re-trued by machining away metal until it is accurately flat again. For this operation the bed has to be removed from the machine, and usually from the factory floor, which is time consuming and costly. Moreover, when it is replaced the whole machine has to be reset which is a complicated procedure.

It is an object of the present invention to overcome or reduce the above disadvantages.

According to the present invention there is provided a machine tool comprising a machine body, a work table for accommodating a work piece, and means for manoeuvering said work table so as to bring the work piece into contact with a tool head, wherein the said means includes a plurality of slide rails fixed either to the machine body or the work table and corresponding bearing blocks containing rolling elements, several of which are at any one time in rolling contact with the slide rails.

Preferably a lower limb of the machine body is also movable in a vertical plane with respect to the machine body itself to raise and lower the work table, by means of bearing blocks attached to said lower limb, which bearing blocks are slidable on vertical rails fixed to the machine body.

Preferably, the work table is slidably mounted on a cross-slide, which is slidably mounted on the lower limb of the machine body.

The table is preferably movable relative to said cross-slide in a first direction by means of bearing blocks fitted to the cross-slide, said bearing blocks being slidable on rails attached to the underneath of the work table.

Preferably the cross-slide is movable relative to the lower limb of the machine body in a second direction perpendicular to said first direction by means of bearing blocks fitted to the cross-slide, said bearing blocks being slidable on rails attached to the lower limb of the machine body.

Preferably each bearing block is provided with at least one endless tube or track containing cylindrical rollers. The extremities of the rollers protrude from the track and are in rolling contact with an edge of the rail. As relative motion occurs between the rail and the bearing block, the rollers are re-circulated around the track.

Preferably, each bearing block is provided with a pair of endless tracks arranged such that the rail is located therebetween.

Ball bearings may be used as an alternative to cylindrical rollers but it has been found that cylindrical rollers suffer from less elastic deformation than ball bearings.

Linear sensors are preferably provided so that the exact position of the work table is known at all times.

Preferably the motion of the work table is effected by a suitable motor.

The invention will now be described further, by way of example only, with reference to and as illustrated in the accompanying drawings, in which:

Figure 1 is a side view of a machine tool in accordance with the invention;

Figure 2 is a vertical section through one of the rails and bearing blocks; and

Figure 3 is a horizontal section along line X-X of Figure 2.

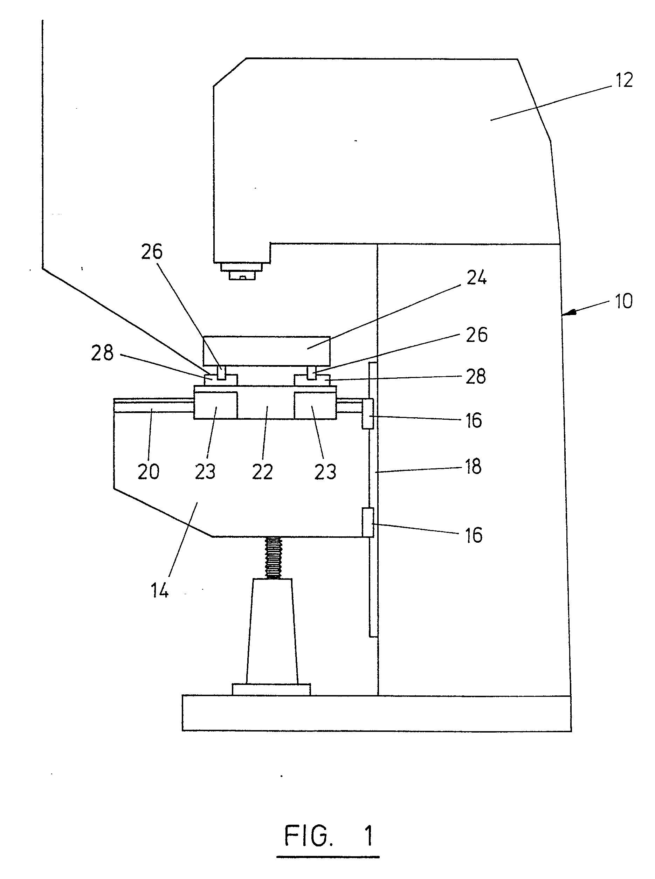

Referring to the drawings, a machine tool 10, for example a knee-type milling machine comprises a machine body 12 which has a lower limb 14. The lower limb 14 is provided with four bearing blocks 16 which engage with two side rails 18 fixed vertically to the machine body. Naturally in Figure 1 only one slide rail and two bearing blocks can be seen because this is a side view. The lower limb is provided with a pair of slide rails 20 fixed adjacent the top edge thereof and a cross-slide 22 slides on the rails by means of four similar bearing blocks 23. A work table 24 for accommodating a work piece is slidably mounted on the table mounting 22 by means of bearing blocks 28 fixed to the mounting, which bearing blocks slide along a pair of rails 26 fixed to the underneath of the work table.

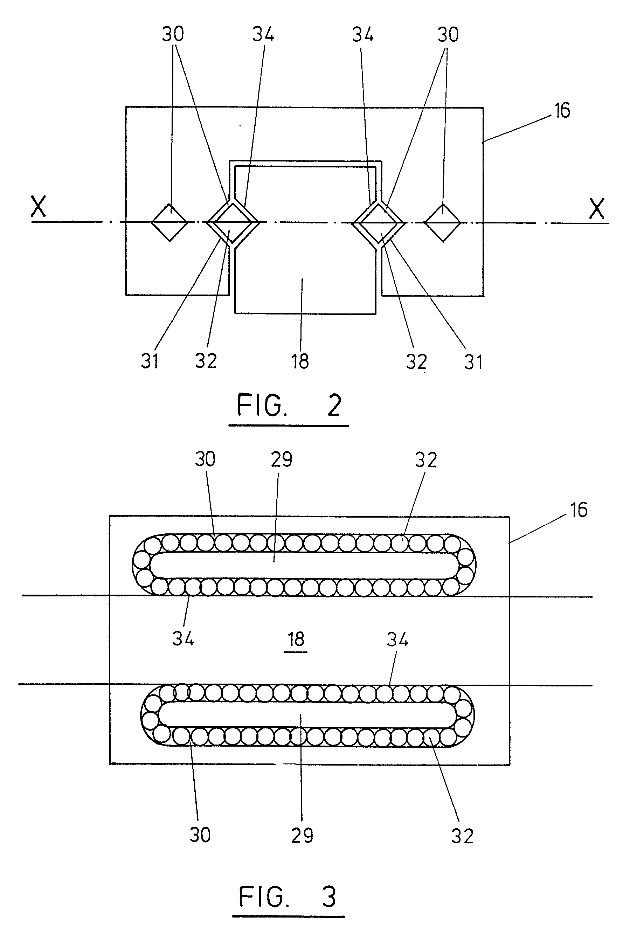

Each of the bearing blocks 16, 23, 28 contain a pair of endless tracks 30 formed in part as a groove 31 in bearing plates 29 and filled with cylindrical rollers 32 as can be seen in Figures 2 and 3. The extremities of the rollers protrude from the tracks and at any one time several of these rollers are in rolling contact with the rail 18, 20, 26. The rollers are continually recirculated around the tracks when there is relative motion between the bearing block and the slide. Each slide has grooves 34 on either side thereof in which the rollers 32 locate.

A suitable electric motor, e.g. a dc motor (not shown) in conjunction with linear sensors (also not shown) controls the motion of the work table 24.

The fact that there are several rollers within each bearing block continually in contact with each slide rail ensures positive location without danger of twisting and thus gives rise to rigidity and accuracy in positioning a work piece.

The work table is able to withstand high loads more easily than conventional milling machines. Furthermore, since there is much less friction involved in the motion of the table, a less powerful motor can be utilised and lubrication is required to a much lesser extent for example by means of grease nipples provided on each bearing block in contrast to wasteful and messy total lubrication of the machine bed hitherto necessary. Wear occurs much more slowly than formerly and when it does it is much more easily remedied. Worn bearing blocks and/or slide rails are simply unbolted and replaced on the machine in situ in its workshop, a very much quicker and simpler operation than hitherto. Moreover resetting is reduced to a minimum because no metal is machined away. This means that the machine will operate much more efficiently and cost effectively.

## Claims

1. A machine tool (10) comprising a machine body (12), a work table (24) for accommodating a work piece, and means for manoeuvering said work table (24) so as to bring the work piece into contact with a tool head, characterised in that the said means includes a plurality of slide rails (18,20,26) fixed either to the machine body or the work table and corresponding bearing blocks (16,23,28) containing rolling elements (32), several of which are at any one time in rolling contact with the slide rails (18,20,26).

2. A machine tool according to Claim 1, further characterised in that a lower limb (14) of the machine body is movable vertically with respect to the machine body itself, by means of bearing blocks (16) attached to said lower limb, which bearing blocks are slidable on vertical rails (18) fixed to the machine body.

3. A machine tool according to Claim 1 or Claim 2 further characterised in that the work table (24) is slidably mounted on a cross-slide (22) which is slidably mounted on the lower limb (14) of the machine body (12).

4. A machine tool according to Claim 3 further characterised in that the work table (24) is movable relative to said cross-slide (22) in a first direction by means of bearing blocks (28) fitted to the cross-slide, said bearing blocks being slidable on rails (26) attached to the underneath of the work table.

5. A machine tool according to Claim 3 or Claim 4 when dependent on Claim 3, further characterised in that the cross-slide (22) is movable relative to the lower limb (14) of the machine body (12) in a second direction perpendicular to said first direction by means of bearing blocks (23) fitted to the cross-slide (22), said bearing blocks being slidable on rails (20) attached to the lower limb of the machine body.

6. A machine tool according to any of the preceding Claims further characterised in that each bearing block (16,23,28) is provided with at least one endless track (30) containing cylindrical rollers (32) which are re-circulated around the track as relative motion occurs between the rail and the bearing block.

7. A machine tool according to any of the preceding Claims further characterised in that linear sensors are provided so that the position of the work table is known at all times.

8. A machine tool according to any of the preceding Claims further characterised in that the motion of the work table is effected by a suitable motor.

FIG. 1

0299800

FIG. 2

FIG. 3

| | DOCUMENTS CONSIDERED TO BE RELEVANT | | EP 88306532.8 |
|---|---|---|---|

| Category | Citation of document with indication, where appropriate, of relevant passages | Relevant to claim | CLASSIFICATION OF THE APPLICATION (Int. Cl.4) |
|---|---|---|---|
| X | DE - A1 - 3 607 524 (NIPPON) <br> * Totality * | 1 | B 23 C 9/00 <br> B 23 Q 1/26 |
| X | DE - A1 - 3 644 743 (NIPPON) <br> * Totality * | 1,6 | |
| X | DE - A1 - 3 238 980 (NIPPON) <br> * Fig. 1-5 * | 1 | |
| A | DE - A1 - 3 128 628 (SEIKO) <br> * Fig. 1-11 * | 1 | |
| A | DE - A1 - 3 038 377 (MAGYAR) <br> * Fig. 1 * | 1 | TECHNICAL FIELDS SEARCHED (Int. Cl.4) |
| A | DE - A1 - 3 005 519 (TERAMACHI) <br> * Totality * | 1 | B 23 C 9/00 <br> B 23 Q 1/00 |
| X | EP - A2/A3 - 0 171 700 (MAHO) <br> * Totality * | 1 | F 16 C 29/00 |
| A | FR - A1 - 2 513 919 (VEB) <br> * Fig. 1-5 * | 1 | |

The present search report has been drawn up for all claims

| Place of search | Date of completion of the search | Examiner |
|---|---|---|
| VIENNA | 19-10-1988 | FUCHS |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82